Europäisches Patentamt

European Patent Office

Office européen des brevets

(11) Publication number: **0 460 609 A1**

## EUROPEAN PATENT APPLICATION

(21) Application number: **91109123.9**

(22) Date of filing: **04.06.91**

(51) Int. Cl.⁵: **C08B 1/00, C08B 9/00, C08J 3/14, //C08L1:22**

(30) Priority: **07.06.90 JP 149268/90**

(43) Date of publication of application:
**11.12.91 Bulletin 91/50**

(84) Designated Contracting States:
**DE FR GB**

(71) Applicant: **NISSHINBO INDUSTRIES, INC.**
**3-10, Nihonbashi Yokoyama-cho**
**Chuo-ku Tokyo 103(JP)**

(72) Inventor: **Takenishi, Soichiro, c/o Nisshinbo**
**Industries, Inc**
**Tokyo Research Center, 1-18-1**
**Nishiaraisakaecho**
**Adachi-ku, Tokyo 123(JP)**
Inventor: **Teramatsu, Yasuhide, c/o Nisshinbo**
**Ind., Inc.**
**Tokyo Research Center, 1-18-1**
**Nishiaraisakaecho**
**Adachi-ku, Tokyo 123(JP)**

(74) Representative: **Gossel, Hans K., Dipl.-Ing.**
**Lorenz-Seidler-Gossel et al**
**Widenmayerstrasse 23**
**W-8000 München 22(DE)**

(54) **Process for producing fine cellulose powder.**

(57) The present invention provides a process for producing a fine cellulose powder having smooth appearance, which comprises spray-drying an aqueous sodium cellulose xanthate solution prepared from a material cellulose and subjecting the resulting powder to cellulose regeneration.

Fig. 1

EP 0 460 609 A1

BACKGROUND OF THE INVENTION

(1) Field of the Invention

The present invention relates to a process for producing a fine cellulose powder having smooth appearance.

(2) Description of the Prior Art

Various processes have hitherto been proposed for production of fine cellulose powder. These processes include, for example, a process comprising hydrolyzing a cellulose of wood, cotton or the like to decompose and remove its amorphous portion to obtain a fine cellulose powder. This process, however, has problems in that the fine cellulose powder obtained has horny appearance because the hydrolysis decomposes and removes only the amorphous portion of the cellulose and allows the crystalline portion to remain, that it is difficult to infiltrate various substances (e.g. dye) into the fine cellulose powder, and that the fine cellulose powder obtained is expensive. There is also known a process comprising dropping a solution of a cellulose or its derivative into a coagulation bath through a capillary to cause coagulation to obtain a fine cellulose powder. This process also has problems in that the process has low productivity, that the process finds it difficult to produce fine particles, and that the process provides a product of very high cost.

There is also a proposed process comprising dry- spraying a solution of an organic solvent-soluble cellulose (e.g. acetyl cellulose) prepared from a cellulose and then subjecting the resulting powder to a treatment such as deacetylation or the like. This process has problems in that the steps are complex, that addition, dissolution and removal of additives are required additionally in order to impart porosity to the fine cellulose powder obtained, and that a treatment such as solvent recovery is required.

Thus, with the conventional processes it has been very difficult to obtain a fine cellulose powder which has a microstructure, which contains an amorphous portion in a large amount, and which is porous and has high absorbability for various substances, at a low cost.

SUMMARY OF THE INVENTION

The present invention has been made in order to eliminate the above-mentioned problems of the prior art, and provides a process for producing a fine cellulose powder, which comprises spray-drying an aqueous sodium cellulose xanthate solution prepared from a material cellulose and subjecting the resulting powder to cellulose regeneration.

BRIEF DESCRIPTION OF THE DRAWINGS

Fig.1 is a scanning electron micrograph showing the particle structure of a fine cellulose powder obtained in Example 3.

Fig. 2 is a scanning electron micrograph showing the particle structure of a fine cellulose powder obtained by decomposing and removing the amorphous portion of a pulp and leaving the crystalline portion.

DETAILED DESCRIPTION OF THE INVENTION

In the process of the present invention, firstly there is prepared, from a material cellulose, an aqueous sodium cellulose xanthate solution having an appropriate polymer concentration and an appropriate viscosity, and the solution is spray-dried.

In the preparation of the aqueous sodium cellulose xanthate solution, a method employed in the production of an ordinary regenerated cellulose fiber (viscose rayon staple or filament) can be used as it is.

The spray drying step has no particular restriction because it is affected by the type, capacity, etc. of the spray dryer used. However, the step is generally effected preferably under the following conditions.

The preferable cellulose concentration in the aqueous solution differs by the average polymerization degree of cellulose but can be 3-30%.

When the cellulose concentration is less than 3%, it is necessary to evaporate a large amount of water, which incurs a high energy cost and gives non-smooth appearance to the regenerated cellulose.

A higher cellulose concentration is more convenient but, in order to obtain a cellulose concentration of more than 30%, a cellulose having a low average polymerization degree is required. Therefore, when there is used a cellulose having an average polymerization degree as the practical usability is not impaired, a cellulose concentration of 30% or less is preferable. However, when a post-treatment or the like is employed to cause crosslinking, it is possible to employ a lower average polymerization degree and a higher cellulose concentration.

The average polymerization degree of cellulose has no particular restriction as long as the aqueous sodium cellulose xanthate solution can have a viscosity range allowing good spraying, i.e. 10 poises or less at 20C°. However, the average polymerization degree is preferably 20-500 when the above-mentioned cellulose concentration is considered together.

The viscosity of the aqueous sodium cellulose xanthate solution cannot be determined in a specific range because it is affected by the type, capacity, etc. of the atomizer used, but is preferably 10 poises or less at 20C° as mentioned above.

In the spray drying, a spray dryer generally employed can be used without adding any modification. The spray dryer can be any of a twin-fluid nozzle type atomizer and a rotary nozzle type atomizer. The temperature of heated air for drying is preferably 80-250C° though it differs by the drying tower, the cellulose concentration, the air volume, etc.

By effecting spray drying under the above conditions, a fine powder of sodium cellulose xanthate can be obtained. Since this powder contains sodium hydroxide etc. and various inorganic salts derived therefrom, the powder is, for example, then immersed in an acidic solution to regenerate a cellulose and further remove the above substances. These procedures can be effected in one stage in an aqueous solvent, or can be effected in two stages.

When the regeneration of cellulose and the water washing for removal of alkalis and the salts are conducted simultaneously in one stage, it is preferable to use a dilute aqueous solution of a strong acid such as hydrochloric acid, sulfuric acid or the like. At that time, it is possible to use a salt (e.g. zinc sulfate, sodium sulfate) together as necessary.

When the regeneration and the water washing are conducted separately in two stages, it is possible to use, in the regeneration, a solvent with which a strong acid (e.g. hydrochloric acid, sulfuric acid) can be mixed, such as low-molecular alcohol (e.g. methanol, ethanol), tetrahydrofuran, toluene or the like, a mixture of said solvents, or other mixture of said solvents and water.

The regeneration of cellulose is not restricted to the above-mentioned method using an acidic solution. It may also be effected by heating the fine powder of sodium cellulose xanthate obtained by spray drying, at 60-120C° under vacuum in the presence of an inert gas to promote the decomposition of sodium cellulose xanthate. The heating time is 10-600 minutes though it varies depending upon the conditions used. After the heating, the resulting product is neutralized in an aqueous dilute acid solution and then washed.

The regeneration of cellulose may also be effected by heating the fine powder of sodium cellulose xanthate obtained by spray drying, at 60-120C° for 10-600 minutes in a poor solvent for sodium cellulose xanthate and cellulose, neutralizing the resulting product in an aqueous dilute acid solution and then effecting washing. (In this case, it is possible to effect heating after adding to the poor solvent a strong acid of at least an equivalent amount required to neutralize the alkali contained in the fine powder of sodium cellulose xanthate.) Herein, the poor solvent for sodium cellulose xanthate and cellulose includes, for example, halogenated hydrocarbons such as chloroform, tetrachloroethane and the like; aromatic hydrocarbons such as toluene, xylene and the like; alicyclic hydrocarbons such as cyclohexanone, tetralin and the like; and higher alcohols such as ethylene glycol, propylene glycol and the like.

The regenerated cellulose is treated with water to dissolve the inorganic substances contained in the cellulose, in water, whereby a fine cellulose powder of high purity can be obtained.

The fine cellulose powder can be used in a suspension in the above-mentioned solvent, or can be used after drying. For the drying, it is preferable to use a dryer of fluidized bed type or the like, in order to prevent bonding between fine particles. An ordinary dryer may also be used because said bonding can be alleviated by occasional mixing and, even if it happens, it can be easily disintegrated by a mechanical means after the drying.

The fine cellulose powder obtained by the above steps of the present process has shapes slightly different depending upon the conditions used, for example, a substantially spherical shape or a substantially flat shape. Any shape, however, has a smooth surface, porosity, a crystallinity of 40% or less as measured by X-ray diffraction, and particle diameters of 0.1-1,000 μm (the diameters differ by the conditions used).

The particle diameters, shape, inside density, etc. of the fine cellulose powder obtained by the present process can be changed as desired by changing the average molecular weight of cellulose, the concentration of sodium cellulose xanthate in its aqueous solution, spray drying conditions, etc.

The powder after regeneration contains inorganic substances such as sodium hydroxide and the like. Therefore, the powder is treated with water to dissolve the inorganic substances in the water, whereby a fine cellulose powder having porosity can be obtained.

The thus obtained fine cellulose powder has high absorbability for various liquids such as aromatic, insecticide, germicide, dye solution, ink and the like. Therefore, the fine cellulose powder can be used as a carrier for said liquids, a filler for various purposes, etc.

While the fine cellulose powder obtained by subjecting a pulp or the like to hydrolysis to remove the amorphous portion and leave the crystalline portion, has horny appearance, poor fluidity, and insufficient absorbability for various substances, the fine cellulose powder according to the present invention has smooth appearance and high absorbability for various substances and accordingly is very useful.

The present invention is hereinater described in more detail by way of Examples.

Example 1

A pulp was immersed in an aqueous solution containing 17.5% by weight of sodium hydroxide, at 14C° for 1 hour. The mixture was squeezed to a 2.8-fold weight of the original pulp weight and allowed to stand at 50C° for 5 days. The resulting alkali cellulose had an average polymerization degree of about 105 as measured in accordance with JIS L 1015.

Into the alkali cellulose was injected 1.5 moles, per one glucose residue, of carbon disulfide ($CS_2$) at room temperature under reduced pressure, and they were reacted for 2 hours. Thereto was added sodium hydroxide and water so that the sodium cellulose xanthate concentration became 10% (in terms of cellulose) and the NaOH concentration became 9%, and the total system was made into a solution by mixing.

The solution was subjected to spray drying under the following conditions, using a spray dryer, SD-12.5 N/R Type (a product of Ashizawa-Niro Atomizer Ltd.).
Hot air amount: 700 m³/hour
Hot air temperature: 180C°
Feeding rate of solution: 20 liters/hour

The resulting powder was added to a 5% aqueous sulfuric acid solution, and the mixture was stirred thoroughly to regenerate a cellulose. The regenerated cellulose was water-washed thoroughly and then dried with stirring so as to prevent bonding between cellulose particles.

The thus obtained fine cellulose powder had particle diameters of 2-10 μm, an average particle diameter of 6.5 μm and a crystallinity of 25% as measured by X-ray diffraction.

Example 2

The same aqueous sodium cellulose xanthate solution as used in Example 1 was dried under the following conditions, using a production minor spray dryer (a product of Ashizawa-Niro Atomizer Ltd.).
Hot air amount: 300 m³/hour
Hot air temperature: 180C°
Feeding rate of solution: 3 liters/hour

The resulting powder was treated in a 3% sulfuric acid-methanol solution at room temperature for 1 hour to regenerate a cellulose. The regenerated cellulose was water-washed, and dried in the same manner as in Example 1.

The thus obtained fine cellulose powder had particle diameters of 1-10 μm, an average particle diameter of 5 μm and a crystallinity of 21% as measured by X-ray diffraction.

Example 3

The standing time of the alkali-containing pulp of Example 1 was extended to 10 days to obtain an alkali cellulose having an average polymerization degree of about 65. Using this alkali cellulose, there was prepared an aqueous solution containing 15% (in terms of cellulose) of sodium cellulose xanthate.

The solution was subjected to spray drying under the same conditions as in Example 2. The resulting powder was subjected to cellulose regeneration to obtain a fine cellulose powder.

The fine cellulose powder had the following properties.
Particle diameters: 5-12 μm
Average particle diameter: 8.5 μm
Crystallinity as measured by X-ray diffraction: 19%

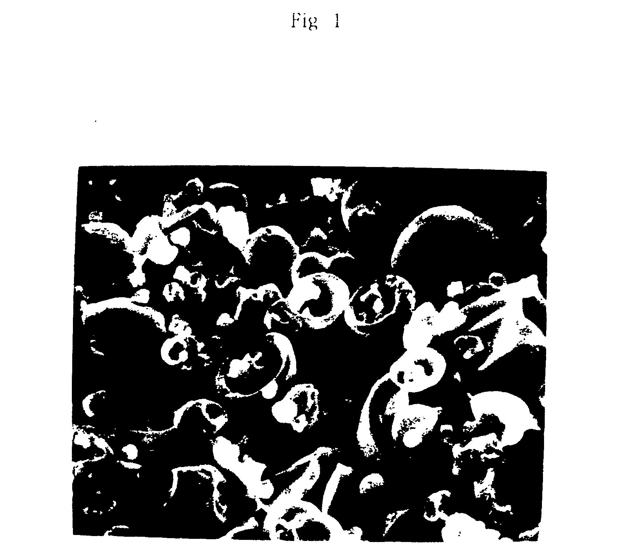

The scanning electron micrograph of the fine cellulose powder is shown in Fig. 1.

Comparative Example

A cellulose powder, Avicel (a product of ASAHI CHEMICAL INDUSTRY CO., LTD) obtained by decomposing and removing the amorphous portion of a pulp and leave the crystalline portion, had the following properties.
Particle diameters: 3-120 μm
Average particle diameter: 40 μm
Crystallinity as measured by X-ray diffraction: 85%

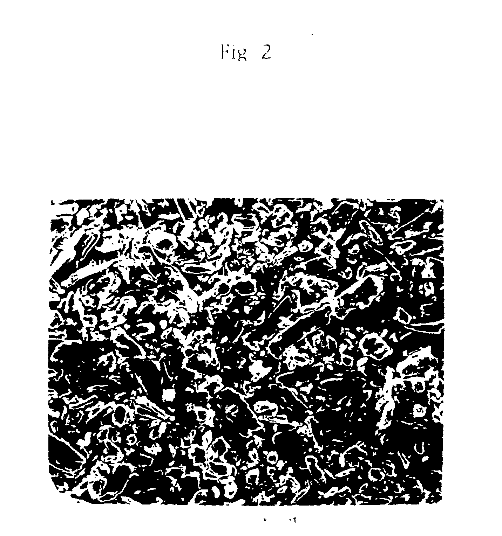

The scanning electron micrograph of the cellulose powder is shown in Fig. 2.

Example 4

The powder after spray drying, obtained in Example 1 was subjected to a heat treatment at 90C° for 30 minutes under reduced pressure. The resulting powder of strong alkalinity was neutralized in a 1% aqueous sulfuric acid solution and then washed with pure water.

The thus obtained fine cellulose powder had particle diameters of 1-10 μm, an average particle diameter of 5 μm and a crystallinity of 19% as measured by X-ray diffraction.

Example 5

The powder after spray drying, obtained in Example 1 was subjected to a heat treatment at 70C° for 60 minutes under refluxing in chloroform containing 1% of sulfuric acid. The resulting powder was water-washed.

The thus obtained fine cellulose powder had particle diameters of 1-10 $\mu$m, an average particle diameter of 5 $\mu$m and a crystallinity of 18% as measured by X-ray diffraction.

Test for water absorbability

The fine cellulose powder obtained in Example 1 was immersed in water to allow the powder to absorb the water sufficiently. The resulting cellulose was subjected to centrifugation at 2,000 rpm for 20 minutes. The water absorbability of the cellulose powder was 157%.

Meanwhile, the above-mentioned cellulose powder, Avicel (a product of ASAHI CHEMICAL INDUSTRY CO., LTD) was measured for water absorbability under the same conditions. The water absorbability was 105%.

## Claims

1. A process for producing a fine cellulose powder, which comprises spray-drying an aqueous sodium cellulose xanthate solution prepared from a material cellulose and subjecting the resulting powder to cellulose regeneration.

2. A process according to Claim 1, wherein the cellulose in sodium cellulose xanthate has an average polymerization degree of 20-500.

3. A process according to Claim 1 or 2, wherein the ccncentration of sodium cellulose xanthate in aqueous solution is 3-30% by weight in terms of cellulose.

4. A process according to any of Claims 1 to 3, wherein the aqueous solution of sodium cellulose xanthate has a viscosity of 10 poises or less at 20C$^\circ$.

5. A process according to Claim 1, wherein the cellulose regeneration is effected in an acidic solution.

6. A process according to Claim 1, wherein the cellulose regeneration is effected by heating.

7. A process according to Claim 6, wherein the cellulose regeneration is effected by heating at 60-120C$^\circ$.

8. A process according to Claim 1, wherein the cellulose regeneration is effected by heating in a poor solvent for sodium cellulose xanthate and cellulose.

9. A process according to Claim 8, wherein the cellulose regeneration is effected by heating in a poor solvent for sodium cellulose xanthate and cellulose at 60-120C$^\circ$.

Fig 1

Fig 2

European
Patent Office

**EUROPEAN SEARCH
REPORT**

Application Number

**EP 91 10 9123**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 501 419 (BRIDGEFORD) <br> * Column 8, line 53 - column 9, line 30; column 10, lines 17-22; column 18, lines 35-55; claims 1-4 * <br> - - - | 1-3,5,6 | C 08 B 1/00 <br> C 08 B 9/00 <br> C 08 J 3/14 // <br> C 08 L 1:22 |
| A | DE-A-1 800 118 (IMHAUSEN INTERNATIONAL CO.) <br> * Whole document * <br> - - - | 1 | |
| A | WPI, FILE SUPPLIER, AN = 79-55315B, Derwent Publications Ltd, London, GB; <br> & JP-A-54 074 855 (TAKEDA CHEMICAL IND. K.K.) 15-06-1979 <br> * Whole abstract * <br> - - - - - | 1 | |

| TECHNICAL FIELDS SEARCHED (Int. Cl.5) |
|---|
| C 08 B <br> C 08 J |

The present search report has been drawn up for all claims

| Place of search | Date of completion of search | Examiner |
|---|---|---|
| The Hague | 12 September 91 | MAZET J.-F. |